# EUROPEAN PATENT APPLICATION

(11) **EP 2 230 119 A2**
(43) Date of publication of application: **22.09.2010**
(21) Application number: 10002818.2
(22) Date of filing: 17.03.2010
(51) Int. Cl.: B60K 6/48, B60K 6/543, B60K 6/12

(54) **Hybrid propulsion system**

(30) Priority: 17.03.2009 US 210222 P
(71) Applicant: Yang,, An-Tao Anthony, Surrey, BC V4N 1M4 (CA); Aleees Eco Ark (Cayman) Co. Ltd., Grand Cayman KY1-1203 (KY)
(72) Inventor: Yang, An-Teo Anthony, Surrey BC V4N 1M4 (CA)
(74) Representative: UEXKÜLL & STOLBERG

(57) **Abstract**

A hybrid system having an engine, a motor (130), a transmission (120), a clutch (150) connecting the engine and the transmission (120), and a continuously variable transmission (140) connecting the motor (130) and the transmission (120) is provided.

## Description

### CROSS-REFERENCE TO RELATED APPLICATIONS

This application claims priority to U.S. application Ser. No. 61/210,222, filed on Mar. 17, 2009. The disclosure of the prior application is considered part of (and is incorporated by reference in) the disclosure of this application.

### BACKGROUND

Since the invention of automobile, the fossil fuel has been the major source of the energy required to propel the vehicle; however, the climate change and the increase of crude oil price have lead to the development of energy efficient vehicles.

Hybrid electric vehicle is currently the most common solutions in producing fuel efficient vehicles, which includes many different configurations utilized by different car companies. Hybrid electric vehicles are capable of shut off the engine while the vehicle is stationary; thus, engine accessories such as: air conditioning compressor, power steering pump, and water pump has to be replaced with electrically driven unit. This design change partially contributed to the increased in cost of hybrid electric vehicles.

Another issue for hybrid electric vehicles is space. Due to the need to place electric machines in proximity of the engine, a volume must be provided for the electric machine; usually by decreasing the size of engine, redesign the transmission to incorporate the electric machines, or increase the size of the hood area. These methods caused some mandatory design changes to the hybrid electrical which also increased the cost.

Parallel hybrid systems on the market are limited to continuously variable transmission; however, not all drivers prefer continuously variable transmission; this is also a major reason which affected the implementation of hybrid vehicle.

### OBJECTIVE

The primary objective is to provide a hybrid propulsion system for vehicle.

The secondary objective is to provide a hybrid propulsion system adaptable to current engine accessories.

### SUMMARY

A hybrid system has an engine, a motor, a transmission, a clutch connecting the engine and the transmission, and a continuously variable transmission connecting the motor and the transmission.

### DESCRIPTION OF THE DRAWING

FIG. 1 is an exploded perspective view of a first embodiment consistent with the present invention.
FIG. 2 is an exploded perspective view of a second embodiment consistent with the present invention.

### DESCRIPTION

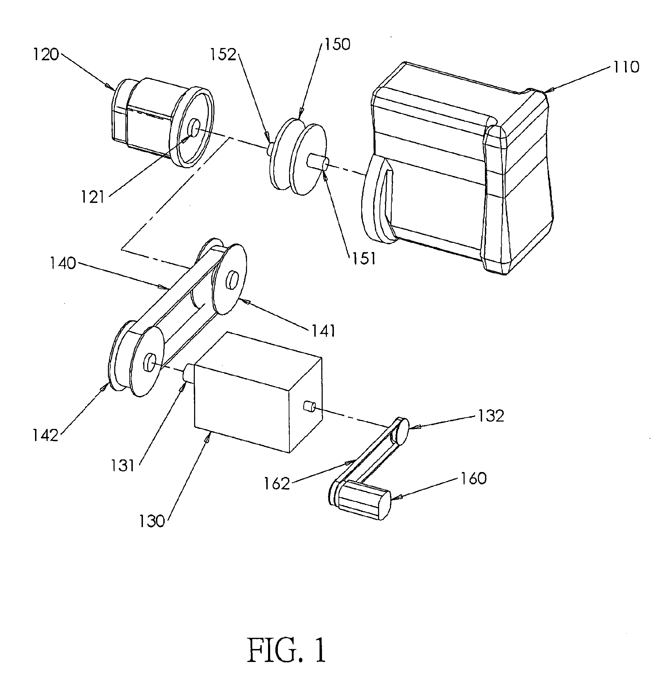

In a first embodiment consistent with the principles of the present invention, as shown in FIG. 1, the output shaft of engine **110** is connected to the engine-side shaft **151** of the clutch **150.** The transmission-side shaft **152** of the clutch **150** is connected to the input shaft **121** of the transmission **120.** The transmission **120** mentioned herein is a complete transmission; if a manual transmission is used, a clutch would be included within the transmission casing, and if an automatic transmission is used, a torque converter would be included within the transmission casing. The rotor shaft **131** of the motor **130** is connected to motor-side pulley **142** of the continuously variable transmission **140.** The transmission-side pulley **141** of the continuously variable transmission **140** is connected to the input shaft **121** of the transmission **120.** An accessory pulley **132** is connected to the rotor shaft **131** of the motor **130.** A belt **162** is connecting the accessory pulley **132** and accessory **160;** accessory **160** mentioned herein represents any accessory that is used in automotive such as air conditioning compressor, power steering pump, water pump, air pump, vacuum pump or other accessories.

If a manual transmission or an automatic transmission is used as the transmission **120,** the motor **130** is to be used in torque control mode. The maximum operational rpm for the motor **130** to provide torque is predetermined as n1. The minimum operational rpm for the motor **130** to power the accessory **160** is predetermined as n4. Two other rpm n2 and n3 are also predetermined between n1 and n4 wherein n2 is greater than n3.

Before user steps on the accelerator pedal, the rpm of motor **130** is maintained above n4. The clutch **150** is released thus disconnecting the engine-side shaft **151** and the transmission-side shaft **152.** The engine **110** may be stopped to conserve fuel. The accessory **160** is powered by motor **130** via the belt **162** and accessory pulley **132.**

When user steps on the accelerator pedal, the pedal angle is translated into a motor torque control signal which specifies the amount of torque that motor **130** should provide. As the motor **130** generates torque, the rpm of the motor **130** increases. When the rpm exceeds n2, the continuously variable transmission **140** will change the ratio to provide more load on the motor-side pulley **142** thus decrease the rpm of the motor **130.** If the rpm exceed n1, the torque of the motor **130** will be set to zero, and no longer generates torque. If the rpm of the motor **130** decrease below n3, the continuously variable transmission **140** will also change to decrease the load on the motor-side pulley **142** to decrease the load thus increase the rpm of the motor **130.**

If the torque demanded by the user exceeds the ability of the motor **130,** the system will enter hybrid mode, which both the engine **110** and the motor **130** will be used to provide torque. The clutch **150** will engage in a controlled manner, which spins the output shaft of the engine **110** and starts the engine **110.**

During high speed cruise, the system will enter engine mode. The engine **110** will be used to provide torque. During engine mode, the clutch **150** is engaged and the torque output for motor **130** is zero. The continuously variable transmission **140** will adjust ratio to maintain the motor rpm as close to n4 as possible to prevent energy waste in over speeding the accessory **160.**

When the user steps on the brake pedal, the motor **130** is used as generator to generate electricity. The system can manage braking force by controlling the current draw from the motor **130.** The system can further manage the braking force by adjusting the rpm of the motor **130;** the continuously variable transmission **140** can change ratio to allow motor **130** to spin at an rpm higher than n1 if needed.

There are other factors that may be included in deciding if motor 130, engine 110, or both are to be used as the source for torque; however, mode decision logics are often application specific, which is not the main subject in this embodiment.

If a CVT type transmission is used as the transmission **120,** the main purpose of the continuously variable transmission **140** is to bridge the motor **130** and the engine **110** and to compensate the rpm difference of the motor **130** and the engine **110.** The operation during electric mode and regenerative mode are essentially the same as if a manual transmission or an automatic transmission is used as the transmission **120.**

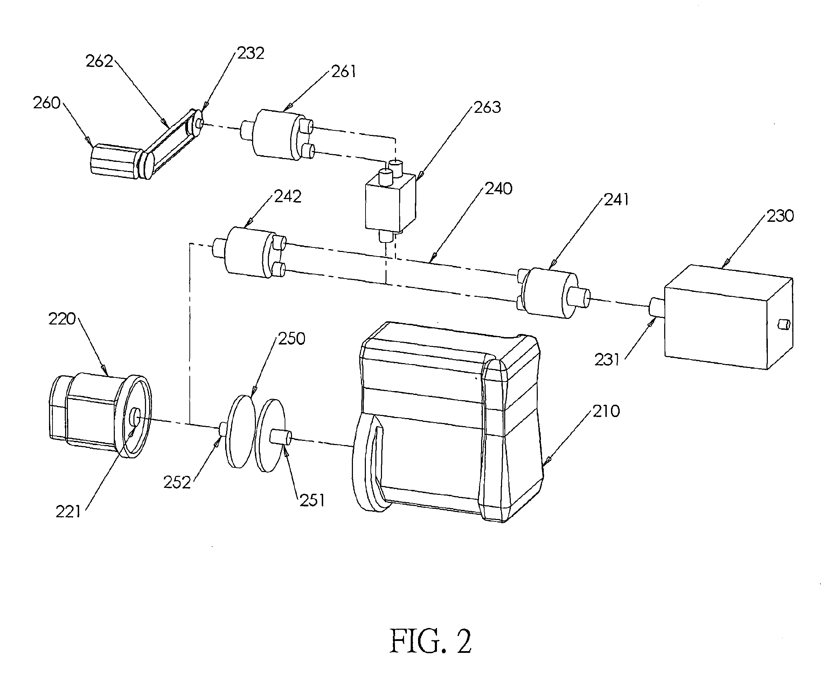

In a second embodiment consistent with the principles of the present invention, as shown in FIG. 2, the output shaft of the engine **210** is connected to the engine-side shaft **251** of the clutch **250.** The transmission-side shaft **252** of the clutch **250** is connected to the input shaft **221** of the transmission **220.** The transmission **220** mentioned herein is a complete transmission; if a manual transmission is used, a clutch would be included within the transmission casing, and if an automatic transmission is used, a torque converter would be included within the transmission casing. The rotor shaft **231** of the motor **230** is connected to motor-side unit **241** of the hydrostatic transmission **240.** The transmission-side unit **242** of the hydrostatic transmission **240** is connected to the input shaft **221** of the transmission **220.** A hydraulic motor **261** is connected to hydraulic lines between motor-side unit **241** and transmission-side unit **242;** a directional switch **263** is included to ensure the hydraulic motor **261** always rotate in the same direction. An accessory pulley **232** is connected to the hydraulic motor **261.** A belt **262** is connecting the accessory pulley **232** and accessory **260;** accessory **260** mentioned herein represents any accessory that is used in automotive such as air conditioning compressor, power steering pump, water pump, air pump, vacuum pump or other accessories.

Motor **230** and motor-side unit **241** can be located away from the engine **210** at rear or the mid section of the vehicle with hydraulic lines connecting between the motor-side unit **241** and the transmission-side unit **242.** The transmission **220** can also incorporate the transmission-side unit **242** with the housing to further integrate with the hydrostatic transmission **240.**

If a manual transmission or an automatic transmission is used as the transmission **220,** the motor **230** is to be used in torque control mode. The maximum operational rpm for the motor **230** to provide torque is predetermined as n1. The minimum operational rpm for the motor **230** to power the accessory **260** is predetermined as n4. Two other rpm n2 and n3 are also predetermined between n1 and n4 wherein n2 is greater than n3.

Before user steps on the accelerator pedal, the rpm of motor **230** is maintained above n4. The clutch **250** is released thus disconnecting the engine-side shaft **251** and the transmission-side shaft **252.** The engine **210** may be stopped to conserve fuel. The motor **230** spins the motor-side unit **241** to power the hydraulic pump **261.** The accessory **260** is powered by hydraulic pump **261** via the belt **262** and accessory pulley **232.**

When user steps on the accelerator pedal, the pedal angle is translated into a motor torque control signal which specifies the amount of torque that motor **230** should provide. As the motor **230** generates torque, the rpm of the motor **230** increases. When the rpm exceeds n2, the hydrostatic transmission **240** will change the ratio to provide more load on the motor-side unit **241** thus decrease the rpm of the motor **230.** If the rpm exceed n1, the torque of the motor **230** will be set to zero, and no longer generates torque. If the rpm of the motor **230** decrease below n3, the hydrostatic transmission **240** will also change to decrease the load on the motor-side unit **241** to decrease the load thus increase the rpm of the motor **230.**

If the torque demanded by the user exceeds the ability of the motor **230,** the system will enter hybrid mode, which both the engine **210** and the motor **230** will be used to provide torque. The clutch **250** will engage in a controlled manner, which spins the output shaft of the engine **210** and starts the engine **210.**

During high speed cruise, the system will enter engine mode. The engine **210** will be used to provide torque. During engine mode, the clutch **250** is engaged and the torque output for motor **230** is zero. The hydraulic motor **261** will utilize the pressurized hydraulic fluid from the hydrostatic transmission **240** and powers the accessory **260.** The directional switch **263** will ensure the direction of rotation of the hydraulic motor **261** stays the same.

When the user steps on the brake pedal, the motor **230** is used as generator to generate electricity. The system can manage braking force by controlling the current draw from the motor **230.** The system can further manage the braking force by adjusting the rpm of the motor **230;** the hydrostatic transmission **240** can change ratio to allow motor **230** to spin at an rpm higher than n1 if needed. There are other factors that may be included in deciding if motor **230,** engine **210,** or both are to be used as the source for torque; however, mode decision logics are often application specific, which is not the main subject in this embodiment.

If a CVT type transmission is used as the transmission **220,** the main purpose of the hydrostatic transmission **240** is to bridge the motor **230** and the engine **210** and to compensate the rpm difference of the motor **230** and the engine **210.** The operation during electric mode and regenerative mode are essentially the same as if a manual transmission or an automatic transmission is used as the transmission **220.**

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A hybrid propulsion system comprising:
a) an engine provided with an output shaft;
b) a motor provided with a rotor shaft having a lower rpm range for producing torque and a higher rpm range for producing electricity;
c) a transmission provided with an input shaft;
d) a continuously variable transmission provided with a first shaft connected to the rotor shaft of the said motor and a second shaft connected to the input shaft of the said transmission; and,
e) a clutch connecting the output shaft of said engine and the second shaft of the said continuously variable transmission.

2. The hybrid propulsion system as claimed in claim 1 wherein said transmission incorporates a clutch or torque converter.

3. A hybrid propulsion system comprising:
a) an engine provided with an output shaft;
b) a motor provided with a rotor shaft;
c) a transmission provided with an input shaft;
d) a continuously variable transmission provided with a first shaft connected to the rotor shaft of the said motor and a second shaft connected to the input shaft of the said transmission;
e) a clutch connecting the output shaft of said engine and the second shaft of the said continuously variable transmission; and,
f) an engine accessory associated with the said rotor shaft of the said motor;
thereby enabling said hybrid propulsion system to release said clutch, shut off said engine, and maintain rpm of said motor when the vehicle is stationary.

4. The hybrid propulsion system as claimed in claim 3 wherein said transmission incorporates a clutch or torque converter.

5. The hybrid propulsion system as claimed in claim 3 wherein said engine accessory is an air conditioning compressor, a power steering pump, or an engine coolant pump.

6. The hybrid propulsion system as claimed in claim 3 wherein said engine accessory is connected to said rotor shaft of the said motor in claim 2 via a belt, chain, gear, or direct coupling.

7. The hybrid propulsion system as claimed in claim 3 wherein said continuously variable transmission enables the said motor to have a lower rpm than said engine when said engine is providing torque.

8. A hybrid propulsion system comprising:
a) an engine provided with an output shaft;
b) a motor provided with a rotor shaft;
c) a transmission provided with an input shaft;
d) a hydrostatic transmission provided with a first shaft connected to the rotor shaft of the said motor and a second shaft connected to the input shaft of the said transmission;
e) a clutch connecting the output of the said engine and the said second shaft of the said hydrostatic transmission;
f) a hydraulic motor associated with said hydrostatic transmission;
g) an engine accessory associated with the said hydraulic motor; and,
h) a hydraulic switch associated with said hydraulic motor to prevent reversal of the said hydraulic motor;
thereby enabling said hybrid propulsion system to release said clutch, shut off said engine, and maintain rpm of said motor when the vehicle is stationary.

9. The hybrid propulsion system as claimed in claim 8 wherein the said motor is located rear of the front axle.

10. The hybrid propulsion system as claimed in claim 8 wherein said transmission incorporates a clutch or torque converter.

11. The hybrid propulsion system as claimed in claim 8 wherein said engine accessory is an air conditioning compressor, a power steering pump, or an engine coolant pump.

12. The hybrid propulsion system as claimed in claim 8 wherein said engine accessory is connected to said rotor shaft of the said hydraulic motor in claim 3 via a belt, chain, gear, or direct coupling.

13. The hybrid propulsion system as claimed in claim 8 wherein said hydrostatic transmission enables the said motor to have a lower rpm than said engine when said engine is providing torque.
